# EUROPÄISCHE PATENTANMELDUNG

(11) **EP 2 065 113 A1**
(43) Veröffentlichungstag der Anmeldung: **03.06.2009**
(21) Anmeldenummer: 08020668.3
(22) Anmeldetag: 28.11.2008
(51) Int. Cl.: B23D 21/14

(54) **Schneidanordnung für eine Schlagschneidevorrichtung und Verfahren zum Trennen eines Werkstücks**

(30) Priorität: 30.11.2007 DE 102007057639
(71) Anmelder: Schuster, Helmut, 86920 Denklingen (DE)
(72) Erfinder: Schuster, Helmut, 86920 Denklingen (DE)
(74) Vertreter: Mollekopf, Gerd Willi

(57) **Zusammenfassung**

Die Erfindung betrifft eine Schneidanordnung für eine Schneidevorrichtung zum Trennen von Werkstücken, insbesondere von Hohlmaterial oder rohrförmigem Material, mit zumindest zwei Matrizenelementen (11, 12) mit jeweils einer Aufnahme (14a, 14b) zum Aufnehmen eines zu trennenden Werkstücks (39, 38), wobei zumindest eines der Matrizenelemente (12) relativ zu dem oder den anderen Matrizenelementen (11) beweglich gelagert ist, und einer in den Werkstückaufnahmen (14a, 14b) der zumindest zwei Matrizenelemente (11, 12) anordenbaren oder angeordneten Stützvorrichtung (15) zum Stützen eines zu bearbeitenden Werkstücks (38, 39), wobei die Stützvorrichtung (15) eine Verbindungseinrichtung (20-28) aufweist, die ein erstes und zumindest ein zweites Stützelement (16, 18) der Stützvorrichtung verbindet.

## Beschreibung

Die Erfindung betrifft eine Schneidanordnung für eine Schneidevorrichtung, insbesondere für eine Schlagschneidevorrichtung, zum Trennen, insbesondere zum adiabatischen Trennen, von Werkstücken und ein Verfahren zum Trennen, insbesondere zum Schneiden, von Werkstücken hierfür.

Beim Hochgeschwindigkeits-Schlagschneiden wird ein hoher Impuls auf eine bewegliche Matrize übertragen, die durch den Impuls lateral gegen eine starre Matrize verschoben wird. Zwischen den Matrizen ist in einem Durchgang durch die Matrizen das Werkstück eingespannt, wobei deren Querschnitt dem des zu trennenden Werkstücks entspricht. Die Beobachtungen zeigen, dass das zu schneidende Werkstück, insbesondere bei Vollmaterial, bei sehr kurz, aber heftig einwirkendem Impuls nahezu ohne plastische Verformung trennbar ist. Dabei wird die verschiebbare Matrize lediglich um wenige zehntel Millimeter gegenüber der starren Matrize versetzt.

In der WO 2004/078396 A1 ist eine Schlagschneidevorrichtung beschrieben, die einen durch eine Beschleunigungseinheit beschleunigbaren Hammer zur Übertragung hoher Impulse auf eine Schneideinheit zum Trennen eines Werkstücks vorsieht.

Es ist Aufgabe der Erfindung, eine Schneidanordnung und ein Verfahren zum Trennen vorzusehen, die beim Schlagschneiden eine hohe Trennpräzision auch bei häufiger Schlagwiederholung gewährleisten.

Diese Aufgabe wird mit den Merkmalen des Anspruchs 1 bzw. 13 gelöst. Vorteilhafte Ausgestaltungen sind Gegenstand von Unteransprüchen.

Gemäß Anspruch 1 weist eine Schneidanordnung zumindest zwei Matrizenelemente zum Aufnehmen eines zu trennenden Werkstücks auf, insbesondere zum Aufnehmen und Trennen von Hohlmaterial wie z.B. Rohren. Zumindest ein Matrizenelement ist bezüglich des oder der anderen Matrizenelemente beweglich gelagert. In der Werkstückaufnahme der Matrizenelemente ist eine Stützvorrichtung angeordnet, wie z.B. ein Stützdorn, -bolzen oder ähnliches, um ein zu bearbeitendes Werkstück in der Werkzeugaufnahme zu stützen und zu stabilisieren. Das Werkstück kann z.B. dadurch stabilisiert werden, dass ein Stützdorn im Inneren eines in der Werkstückaufnahme zu schneidenden Rohres angeordnet ist und das Rohr von Innen stützt. Beim Trennen des Werkstücks wird so durch die Stützvorrichtung verhindert, dass sich der Querschnitt des Werkstücks beim Trennvorgang verformt. Die Stützvorrichtung weist dabei zumindest ein erstes und ein zweites Stützelement auf, die mittels einer Verbindungseinrichtung miteinander verbunden sind.

Zu trennende Werkstücke können jede Art von Hohlmaterial mit beliebigem Querschnitt sein, wie z.B. Rohrmaterial mit rundem, rechteckigen oder einem unregelmäßig geformten Querschnitt, der jedoch entlang der Zufuhrrichtung bzw. in axialer Richtung des Materials gleich bleibt. Zum Beispiel kann auch der Innenraum eines Hohlmaterials durch ein oder mehrere Trennwände unterteilt sein wobei die Stützvorrichtung dann eine der Anzahl der Teil-Innenräume entsprechende Anzahl an Elementen aufweist, um die jeweiligen Innenräume entsprechend zu stabilisieren bzw. zu stützen.

Beim Verschieben des beweglichen Matrizenelements gegen ein angrenzendes Matrizenelement kann ein Winkelversatz zwischen den beiden Elementen auftreten. Da die Stützvorrichtung in der Werkzeugaufnahme der Matrizenelemente angeordnet ist kann ebenso ein Winkelversatz zwischen den zumindest zwei Stützelementen der Stützvorrichtung auftreten, insbesondere wenn zumindest ein Stützelement im beweglichen Matrizenelement angeordnet ist und eine Kontaktfläche zwischen den Stützelementen in der Trennebene liegt. Dadurch können Verunreinigungen zwischen die Stützelemente eindringen, wodurch sich nach häufiger Schlagwiederholung die Trennpräzision verringern würde. Da die Verbindungseinrichtung die einzelnen Stützelemente miteinander verbindet, insbesondere dicht aneinander anliegend verbindet, entsteht beim Verschieben, bzw. beim Trennen, kein oder nahezu kein Winkelversatz zwischen den Stützelementen und damit insbesondere kein Spalt zwischen den beim Trennen zueinander verschobenen Stirnflächen. Das bedeutet, dass nahezu keine Verunreinigungen zwischen die Stützelemente eindringen können, woraus sich ein geringerer Verschleiß der Stützelemente, insbesondere von gegeneinander bewegten Kontaktflächen der Stützelemente ergibt. Durch Verwendung der Verbindungseinrichtung ergibt sich demnach eine hohe Trennpräzision und ebenso eine hohe Standzeit der Schneidanordnung auch nach häufiger Schlagwiederholung.

Bei einer Ausgestaltung ist die Verbindungseinrichtung innerhalb oder im Wesentlichen innerhalb der Stützvorrichtung angeordnet, insbesondere in zumindest einem Durchgang oder Bohrung der Stützvorrichtung.

Vorteilhaft weist die Verbindungseinrichtung zumindest ein Zugelement auf, insbesondere ein Seilzug, wie ein Bowdenzug. Vorteilhaft steht das Zugelement unter Zugspannung, um Zugkräfte beim Verbinden der Stützelemente zu übertragen. Jedes Material mit einer genügend hohen Reißfestigkeit bzw. Stabilität ist dazu geeignet, z.B. Stahl. Ebenfalls möglich ist die Anordnung von mehreren Zugelementen, z.B. um die auszuübenden Zugkräfte auf mehrere Elemente zu verteilen, damit insgesamt die einzelnen Elemente weniger stark beansprucht werden.

Ganz besonders vorteilhaft übt ein Zugelement ständig eine nahezu konstante Zugkraft auf das Verbindungselement aus, so dass die Stützelemente aneinander gepresst werden. Ein Spalt zwischen den einzelnen Stützelementen kann daher nahezu nicht auftreten oder ein Spalt wird sofort nach dem Auftreten durch die Zugkraft des Ausgleichselements wieder geschlossen.

Die Verbindungseinrichtung weist vorteilhaft eine Spanneinrichtung zum Spannen des Zugelements auf. Zum Beispiel kann ein Seilzug mit Hilfe einer Ratsche unter Zugspannung gesetzt werden, wobei die Spanneinrichtung vorteilhaft entsprechende Befestigungen zum Halten einer eingestellten Spannung aufweist, wie z.B. Kontermuttern oder ähnliches.

Beim Verschieben der Stützelemente gegeneinander entsteht eine Zugbelastung auf das Zugelement, da das Zugelement durch das Verschieben gedehnt wird. Um eine Überbelastung des Zugelements zu vermeiden, weist die Verbindungseinrichtung vorteilhaft zumindest ein Ausgleichselement zum Ausgleichen der Zugbelastung auf, wie z.B. Spiralfedern. Durch die Vermeidung von Überlastung des Zugelements wird die Lebensdauer des Zugelements und damit der Stütz- bzw. Schneidanordnung erhöht und Wartungszeiten verringern sich. Besonders vorteilhaft bildet oder ist das Ausgleichselement gleichzeitig die Spanneinrichtung, wie z.B. eine Feder, die das Zugelement unter Zugspannung hält und gleichzeitig bei einer Dehnung des Zugelements zumindest soweit nachgibt, dass eine Überlastung des Zugelements vermieden wird.

Besonders vorteilhaft verläuft das Zugelement senkrecht oder im Wesentlichen senkrecht zur Trennebene der Schneidanordnung, d.h. die Zugkraft zum Zusammenhalten der Stützelemente wird senkrecht zur Trennebene ausgeübt.

Vorteilhaft weist die Stützvorrichtung zumindest einen Durchlass bzw. Durchgang auf in dem die Verbindungseinrichtung angeordnet ist. Durch den Durchlass kann das zumindest eine Zugelement geführt werden, wobei ebenso mehrere Durchlässe für mehrere Zugelemente vorgesehen sein können. Die Anzahl und der Durchmesser des Durchlasses oder der Durchlässe ist abhängig vom Querschnitt der Stützvorrichtung. Die Stützvorrichtung muss trotz der Durchlässe eine genügend hohe Stabilität aufweisen, um einem Schlag beim Trennen ohne Verformung standzuhalten.

Vorteilhaft weist die Stützvorrichtung zumindest einen zumindest teilweise gefasten End- oder Stirnbereich auf. Beim Verschieben der Stützelemente gegeneinander wird bzw. werden ebenfalls der Durchlass oder die Durchlässe gegeneinander verschoben. Die im Durchlass liegenden Zugelemente können dadurch an den Kanten einer Öffnung der jeweiligen Stützelemente anliegen und evtl. beschädigt werden. Daher sind vorteilhaft die Öffnungen der Stützelemente, insbesondere einander zugewandte Öffnungen, zumindest teilweise gefast, um einen kontaktfreien Verlauf des oder der Zugelemente im jeweiligen Durchlass auch während der Verschiebens oder Versetzens zu gewährleisten.
Besonders vorteilhaft weist die Schneidanordnung eine verfahrbare Positioniervorrichtung auf, mit der die Stützvorrichtung in der Werkzeugaufnahme positionierbar ist. Durch die Positioniervorrichtung, wie z.B. einen verfahrbaren Schlitten, auf dem ein Anschlag wie ein Stab oder Dorn angeordnet ist, kann die Stützvorrichtung immer wieder an die exakt gleiche Stelle in den Werkzeugaufnahmen der Matrizenelemente geschoben werden. Insbesondere in eine Stellung in der eine Fläche der Stützvorrichtung, z.B. eine Kontaktfläche der Stützelemente oder eine Endfläche der Stützvorrichtung, in einer Ebene mit der Trennebene liegt.

Vorteilhaft ist die Positioniervorrichtung axial oder im Wesentlichen axial zu den Aufnahmen der Matrizenelemente verfahrbar ist, insbesondere horizontal verfahrbar ist. Insbesondere ist die Positioniervorrichtung bei einer Schlagschneidemaschine mit vertikal verlaufender Trennebene und damit horizontaler Zufuhr des zu trennenden Werkstücks zumindest horizontal verfahrbar. Um Werkstücke unter verschiedenen Winkeln zu Schneiden, bzw. Anzuschneiden, ist auch eine Zufuhr des Werkstücks unter verschiedenen Winkeln zur Trennebene möglich. Bei einer Ausgestaltung ist mittels der Positioniervorrichtung ein getrenntes Werkstückteil aus der beweglichen Matrize entnehmbar oder aufnehmbar, insbesondere ist das getrennte Werkstückteil mit der Positioniervorrichtung einer Fördereinrichtung zustellbar.

Vorteilhaft liegt zumindest ein Teil des Außenumfangs der Stützvorrichtung an einem Innenumfang eines zu trennenden Werkstücks an, insbesondere im Bereich der Trennebene. Beim Trennen wird dadurch der auf das Werkstück übertragene Impuls direkt weiter auf die Stützvorrichtung übertragen. Die Stützvorrichtung stabilisiert die Innenkontur bzw. -querschnitt des zu trennenden Werkstücks, so dass dieses nicht oder nahezu nicht verformt wird.

Besonders vorteilhaft ist zumindest ein erstes Stützelement im beweglichen Matrizenelement angeordnet und ein daran anschließendes zweites Stützelement in dem oder den anderen Matrizenelementen. Vorteilhaft liegt dabei eine (Stirn-)Fläche des ersten Stützelements, die an eine (Stirn-)Fläche des zumindest zweiten Stützelements anschließt, in der Trennebene der Schneidvorrichtung. Die exakte Position der Stirnfläche(n) in der Trennebene wird durch das Positionieren der Stützvorrichtung mit der Positioniervorrichtung gewährleistet.

Zum Ausgleichen von Toleranzen eines zu trennenden Werkstücks, insbesondere von Toleranzen des Innendurchmessers, weist die Stützvorrichtung zumindest ein Anpassungs- bzw. Toleranzelement auf. Beispielsweise weist ein Außenumfang der Stützvorrichtung einen Toleranzring, eine Scheibenfeder oder ähnliches auf. Damit wird ein sicherer Sitz der Stützvorrichtung in einem zu trennenden Werkstück gewährleistet.

Zum leichteren Einführen der Stützvorrichtung in die Werkstückaufnahme bzw. in ein zu trennendes Werkstück ist zumindest ein Endbereich der Stützvorrichtung gefast.

Besonders vorteilhaft ist zwischen dem beweglichen Matrizenelement und einer Stützstruktur für die Schneidanordnung eine Dämpfungseinrichtung zwischen der der Schlagseite der beweglichen Matrize gegenüberliegenden Seite und der Stützstruktur angeordnet. Mit dem Dämpfungselement wird überschüssige Energie vom Schlag gedämpft, falls die Schlagenergie nicht vollständig in Trennenergie und Wärmeenergie überführt werden konnte. Somit wird die Ausbreitung überschüssiger Schlagenergie, die gerade bei toleranzbehafteten Werkstücken von Schlag zu Schlag stark variieren kann, auf einen möglichst kleinen Teilbereich des Trennwerkzeugs begrenzt und eine Ausbreitung auf die Schneidanordnung weitgehend verhindert.

Vorteilhaft weist die Schneidanordnung eine Werkstückfördereinrichtung zum Zuführen eines Werkstücks, insbesondere von Stangenmaterial, einer vorgegebenen Länge in die Aufnahmen der zumindest zwei Matrizenelemente auf. In Ausgestaltung weist die Werkstückfördereinrichtung eine Spanneinrichtung zum zeitweisen Spannen des zuzuführenden Werkstücks auf.

Ein Verfahren zum Trennen von Werkstücken kann insbesondere mit der oben beschriebenen Schneidanordnung durchgeführt werden. In einem ersten Schritt wird der Werkstückaufnahme der Schneidanordnung ein Werkstück, wie z.B. Rohrmaterial, zugeführt. Mit der verfahrbaren Positioniereinrichtung wird die Stützvorrichtung in der Werkstückaufnahme so positioniert, dass eine Fläche der Stützvorrichtung bündig mit der Trennebene der Schneidanordnung ausgerichtet ist, d.h. die Fläche liegt in der Trennebene. Die Fläche kann eine Stirnfläche der Führungsanordnung sein oder bevorzugt eine Kontaktfläche über die eine Stirnfläche des ersten Stützelements mit einer Stirnfläche des zumindest einen zweiten Stützelements miteinander in Kontakt stehen. Damit wird gewährleistet, dass ein Werkstück beim anschließenden Trennen direkt an der Trennkante unterstützt wird und sich durch den hohen Impuls beim Trennen nicht oder kaum verformt. Bevorzugt liegt während des Trennens die Stützvorrichtung zumindest teilweise an einem Innenumfang des zu trennenden Werkstücks an, damit der Impuls beim Trennen direkt auf die Stützvorrichtung übertragen wird. Dabei kann ein Teil der Stützvorrichtung plan am Innenumfang anliegen oder die Stützvorrichtung weist am Umfang ein Profil auf, wie z.B. Rillen, die das Werkstück ausreichend stützen, um eine Verformung des Werkstücks beim Trennen zu verhindern bzw. zu verringern.

Bevorzugt wird nach dem Trennen eines Werkstücks durch das weitere Zuführen eines zu trennenden Werkstücks das abgetrennte Werkstück aus der Werkstückaufnahme ausgeworfen bzw. ausgeschoben, insbesondere auf ein Anschlagelement der Positioniervorrichtung. Die verfahrbare Positioniervorrichtung kann dann anschließend zum Transportieren des geschnittenen Werkstücks verwendet werden. Jedoch kann das abgetrennte Werkstück z.B. auch direkt auf eine Fördereinrichtung oder in einen Sammelbehälter ausgeworfen werden. Um beim weiteren Zuführen eines Werkstücks die Position der Stützvorrichtung in der Werkstückaufnahme zu sichern, d.h. die Ausrichtung der Stirn- oder Kontakt-Fläche der Stützvorrichtung zur Trennebene, wird während oder nach dem weiteren Zuführen die Stützvorrichtung wieder mittels der Positioniervorrichtung in dieser Position gehalten oder in diese Position verschoben. So wird bei jedem Trennvorgang gewährleistet, dass die Stirn- oder Kontakt-Fläche der Stützvorrichtung genau mit der Trennebene ausgerichtet ist und beim Trennen kaum Verschleiß an der oder den Flächen der Stützvorrichtung auftritt. Daher bleibt die Präzision beim Trennen auch nach häufiger Schlagwiederholung konstant hoch und Wartungszeiten verringern sich.

Vorteilhaft liegt während des Zuführens und/oder des weiteren Zuführens des zu trennenden Werkstückrohlings die Positioniervorrichtung an der Stützvorrichtung anliegt, um die Position der Stützvorrichtung in den Werkzeugaufnahmen zu sichern. Bei einer alternativen oder zusätzlichen Ausgestaltung ist eine Vorschubvorrichtung zum Zuführen und/oder weiteren Zuführen eines zu trennenden Werkstücks zumindest während des Trennens von dem zu trennenden Werkstück entkoppelt. In weiterer oder alternativer Ausgestaltung liegt zumindest während des Trennens zumindest ein Teil des Außenumfangs der Stützvorrichtung zumindest teilweise am Innenumfang des zu trennenden Werkstückrohlings an, insbesondere liegt die Stützvorrichtung angrenzend an oder nahe des Bereichs der Trennebene an.

Vorteilhaft weist die Schneidanordnung eine Klemmvorrichtung auf, mit der die Position eines in den Werkzeugaufnahmen der Matrizenelemente angeordneten zu bearbeitenden Werkstücks gesichert wird. So wird insbesondere gewährleistet, dass nach dem Zuführen eines zu trennenden Werkstücks, das Werkstück vor und während dem Trennen seine Position beibehält und nicht verrutscht. Die Präzision bei der Bearbeitung wird dadurch weiter erhöht. Die Klemmvorrichtung ist dabei so angeordnet, dass das bewegliche Matrizenelement gegenüber dem oder den anderen Matrizenelementen leicht versetzt wird, wodurch ein in den Werkzeugaufnahmen des beweglichen und des zumindest einen weiteren Matrizenelements angeordnetes Werkstück eingeklemmt und gesichert wird. Die Klemmvorrichtung kann vorteilhaft in einer Schneidanordnung ohne die beschriebene Stützvorrichtung verwendet werden.

Vorzugsweise ist mittels der Klemmvorrichtung das bewegliche Matrizenelement gegenüber dem oder den anderen Matrizenelementen versetzbar, insbesondere mittels zumindest eines keilförmigen Klemmelements der Klemmvorrichtung.

Dabei kann eine Schneideinrichtung mit der Klemmvorrichtung wie folgt vorgesehen sein: Schneideinrichtung für eine Schneidevorrichtung zum Trennen von Werkstücken, insbesondere von Hohlmaterial oder rohrförmigem Material, mit zumindest zwei Matrizenelementen mit jeweils einer Aufnahme zum Aufnehmen eines zu trennenden Werkstücks, wobei zumindest eines der Matrizenelemente relativ zu dem oder den anderen Matrizenelementen beweglich gelagert ist; mit einer Werkstückfördereinrichtung zum Zuführen eines Werkstücks, insbesondere von Stangenmaterial, einer vorgegebenen Länge in die Aufnahmen der zumindest zwei Matrizenelemente; und mit einer Klemmvorrichtung zum Sichern einer Position eines in den Werkstückaufnahmen angeordneten und zu trennenden Werkstücks.
In einer Ausgestaltung weist die Werkstückfördereinrichtung der Schneideinrichtung eine Spanneinrichtung zum zeitweisen Spannen des zuzuführenden Werkstücks auf. In weiterer zusätzlicher oder alternativer Ausgestaltung wirkt die Klemmvorrichtung auf die verschiebbare Matrize und weist eine Nachführeinrichtung auf, so dass die Klemmwirkung zum Sichern der Position des zu trennenden Werkstücks auch bei einer Verschiebung der verschiebbaren Matrize wirkt. In weiterer alternativer oder zusätzlicher Ausgestaltung wirkt die Klemmvorrichtung auf die verschiebbare Matrize wirkt und die verschiebbare Matrize ist mittels einer Rückstelleinrichtung entgegen der Wirkung der Klemmvorrichtung in eine Grundstellung überführbar, insbesondere in eine Grundstellung, bei der die Aufnahmen der starren und beweglichen Matrize zueinander ausgerichtet sind.

Dabei kann eine Schneideinrichtung mit der Klemmvorrichtung nach dem folgenden Verfahren betrieben werden: Verfahren zum Sichern eines zu trennenden Werkstücks in einer Schneideeinheit mit einer verschiebbaren und einer beweglichen Matrize, insbesondere Schneideeinheit oder -anordnung wie in den Ansprüche beschrieben, wobei die Matrizen jeweils eine Aufnahme zum Aufnehmen des zu trennenden Werkstücks aufweisen, und das Verfahren die folgenden Schritte aufweist: a) Vorschieben des zu trennenden Werkstücks, insbesondere von Stangematerial, mittels einer das Werkstück greifenden oder klemmenden Werkstück-Fördereinrichtung; b) Sichern des zu trennenden Werkstücks in den Aufnahmen der Matrizen durch Ausüben einer Verschiebungskraft zwischen den Matrizen, wobei die Verschiebungskraft zumindest eine senkrecht zu den Achsen der Aufnahmen wirkende Komponente aufweist und wobei die Verschiebungskraft zumindest zeitweise auch während des Verschiebens des zu trennenden Werkstücks wirken kann, wobei insbesondere die Verschiebungskraft auf die verschiebbare Matrize wirkt; c) Lösen des Greifens oder der Klemmung des Werkstücks durch die Werkstück-Fördereinrichtung; d) Trennen des gesicherten Werkstücks durch Versetzen der verschiebbaren Matrize; e) Rückstellen der verschiebbaren Matrize unter Ausrichtung der Aufnahmen der Matrizen; und f) Wiederholen der obigen Schritte. Gemäß einer Ausgestaltung wirkt eine Rückstelleinrichtung zum Rückstellen der verschiebbaren Matrize zumindest während des Trennens nicht auf die verschiebbare Matrize, insbesondere ist die Rückstelleinrichtung von der verschiebbaren Matrize beabstandet.

Anhand von Zeichnungen werden Ausführungsformen der Erfindung näher erläutert. Es zeigen:
- Fig. 1: eine Seitenansicht eines Matrizenblocks ohne Stützvorrichtung im Schnitt,
- Fig. 2: eine Seitenansicht einer Stützvorrichtung im Schnitt,
- Fig. 3: eine Schnittdarstellung der Seitenansicht der Stützvorrichtung von Fig. 2 mit gegeneinander verschobenen Stützelementen,
- Fig. 4-7: schrittweise Darstellungen eines Verfahrensablaufs zum Trennen von Werkstücken,
- Fig. 8: eine Vorderansicht des Matrizenblocks von Fig. 1 mit einer Darstellung einer Klemmvorrichtung im Schnitt, und
- Fig. 9: ein Detail der Klemmvorrichtung von Fig. 8.

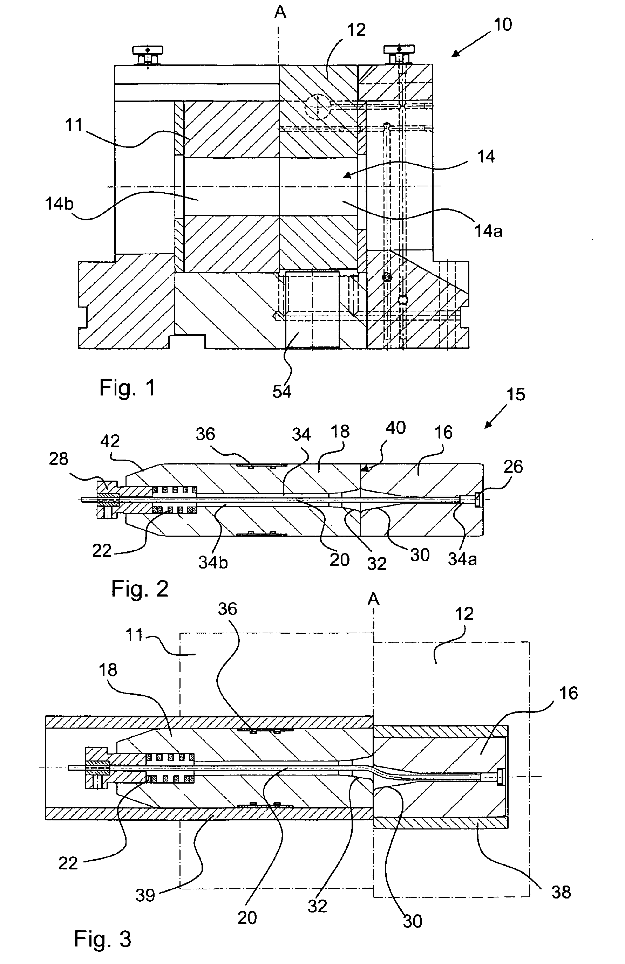

Fig. 1 zeigt eine Seitenansicht eines Matrizenblocks 10, der bei der bevorzugten Ausgestaltung der Schneidanordnung verwendet wird. Der Matrizenblock weist eine bewegliche Matrize 12 und eine daran anschließende, feststehende Matrize 11 auf. Durch einen Schlag bzw. Impuls auf die Oberseite der beweglichen Matrize 12 wird diese gegen die feststehende Matrize 11 verschoben und ein in einer Werkstückaufnahme 14 des Matrizenblocks 10 angeordnetes Werkstück 38, 39 (vgl.
Fig. 3) wird in der Trenn- bzw. Schneidebene A getrennt. Die Werkstückaufnahme 14 unterteilt sich in eine erste Aufnahme 14a in der beweglichen Matrize 12 und eine zweite Aufnahme 14b in der starren Matrize 11.

Fig. 2 zeigt eine bevorzugte Ausgestaltung eines Stützdoms 15, der bei Verwendung in der Werkzeugaufnahme 14 des Matrizenblocks 10 von Fig. 1 angeordnet ist. Der Führungs- bzw. Stützdorn 15 weist zwei Stützelemente 16, 18 auf, die mittels einer Verbindungseinrichtung 20-28 verbunden sind. Die Verbindungseinrichtung 20-28 weist einen in einem Durchlass bzw. -gang 34 angeordneten Seilzug 20 auf, dessen Ende am Element 16 mit einem Bolzen 26 befestigt ist und dessen anderes Ende am zweiten Element 18 an einem Befestigungskopf 28 befestigt ist. Der Durchgang 34 unterteilt sich in einen ersten Durchgang 34a in der beweglichen Matrize und einen zweiten Durchgang 34b in der starren Matrize 11. Der Seilzug 20 wird durch eine Feder 22, die in einer Aussparung des zweiten Elements 18 angeordnet ist, unter Zugspannung gehalten. Dadurch werden die beiden einander zugewandten Enden bzw. Stirnflächen der Stützelemente 16, 18 zusammengepresst und eine Verbindung der beiden Elemente senkrecht zu einer Kontaktfläche 40 gewährleistet, wobei ein Verschieben parallel zur Kontaktfläche 40 ermöglicht ist. Durch ein gefastes Ende 42 des Stützdoms 15 kann der Dom 15 leichter in die Werkzeugaufnahme 14 bzw. in das hohle Werkstück eingeführt werden. Ebenso wird ein axiales Verschieben in das Werkstück 39 erleichtert.

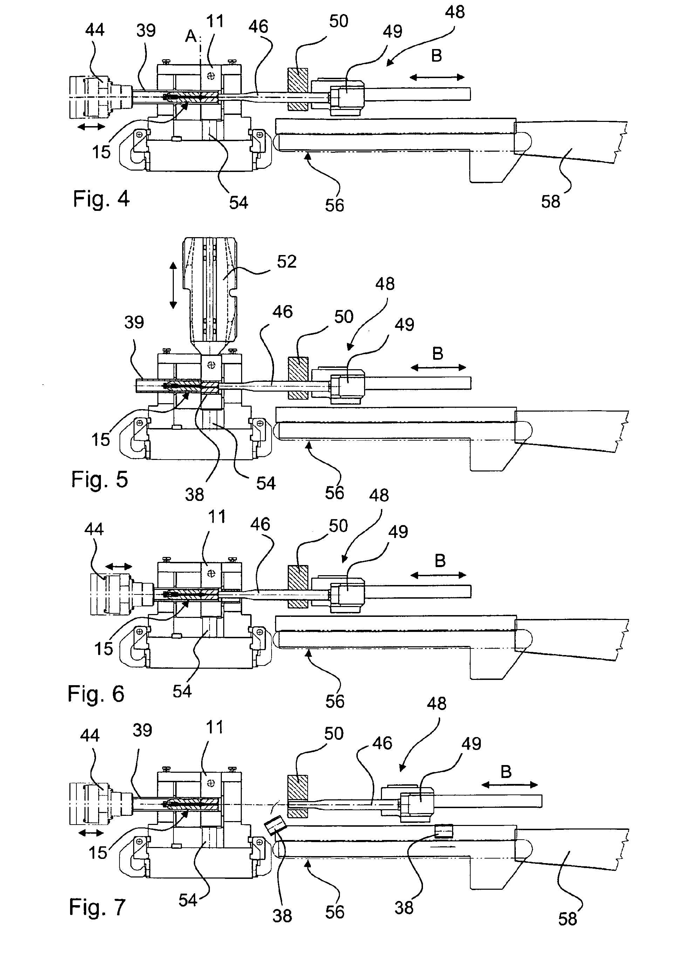

Fig. 3 zeigt die Stützvorrichtung 15 von Fig. 1 wobei das erste Element 16 mit einem geschnittenen Werkstück 38 nach dem Trennen gegen das zweite Element 18 versetzt ist. Dabei ist das abgetrennte Werkstück 38 von dem als Stangenmaterial vorliegenden Werkstück 39 durch den Trennschlag abgetrennt worden. Das Stangenmaterial wird für den nächsten Trennvorgang von links nachgeschoben (vgl. Figs 4-7). Die Positionen der beweglichen und der feststehenden Matrize 11, 12 sind durch strichpunktierte Linien angedeutet. Durch den Versatz der beiden Stützelemente 16, 18 tritt ebenfalls ein Versatz der Öffnungen 30, 32 der Stützelemente 16, 18 auf. Um eine Beschädigung des Seilzugs 20 zu vermeiden, insbesondere durch ein Einklemmen des Seilzugs 20 oder eine Abnutzung des Seilzugs 20 an den Kanten der Öffnungen 30, 32, weisen die Öffnungen 30, 32 Fasen auf, um eine (Kanten-)freie Führung des Seilzugs 20 von einem Element zum anderen zu gewährleisten. Dabei wirkt trotz des Versatzes zwischen den beiden Stützelementen 16, 18 die Zugkraft der Verbindungseinrichtung zwischen den beiden Elementen 16, 18 und selbige werden weiterhin zusammengepresst, so dass kein Spalt an der Kontaktfläche 40 entsteht.

Zum Ausgleichen von Toleranzen des Innenumfangs bzw. -durchmessers des zu trennenden Werkstücks 39 weist der Stützdorn 15 ein Anpassungselement 36 auf. Dadurch wird gewährleistet, dass die Position des Stützdoms 15 nach dem Einführen im Werkstück gesichert ist. In dieser Ausführung wird ein Toleranzring verwendet, der mit O-Ringen vorgespannt ist.

Die Figs. 4-7 zeigen schrittweise ein bevorzugtes Verfahren zum Trennen von Werkstücken 39 mit einer Schneidanordnung in der die oben in Bezug auf Figs. 1-3 beschriebenen Elemente verwendet werden. Fig. 4 zeigt eine Seitenansicht einer bevorzugten Ausgestaltung einer Schneidanordnung. Neben dem Matrizenblock 10 ist eine Positioniervorrichtung 48 angeordnet. Auf einem horizontal (Richtung B) verfahrbaren Schlitten 49 ist ein Anschlagdorn 46 angeordnet. Von links ist das zu trennende Werkstück 39 mittels einer Vorschubzange 44 zuführbar. Im dargestellten Schritt ist das Werkstück 39 bereits mittels der Vorschubzange 44 um eine gewünschte Länge der Werkstückaufnahme zugeführt (entsprechend der Länge des abzutrennenden Werkstücks 38). Der Stützdorn 15 ist so in der Werkstückaufnahme positioniert, dass die Kontaktfläche 40 der beiden Stützelemente 16, 18 in der Trennebene A der Schneidanordnung liegt, bzw. die Kontaktfläche 40 ist zu der Trennebene 40 ausgerichtet. Während des Zuführens des Werkstücks 39 wird die Position des Stützdoms 15 in der Werkstückaufnahme 14 durch den Anschlagdorn 46 gesichert, der gegenüberliegend zur Zuführung an einem Ende des Stützdorns 15 anliegt.

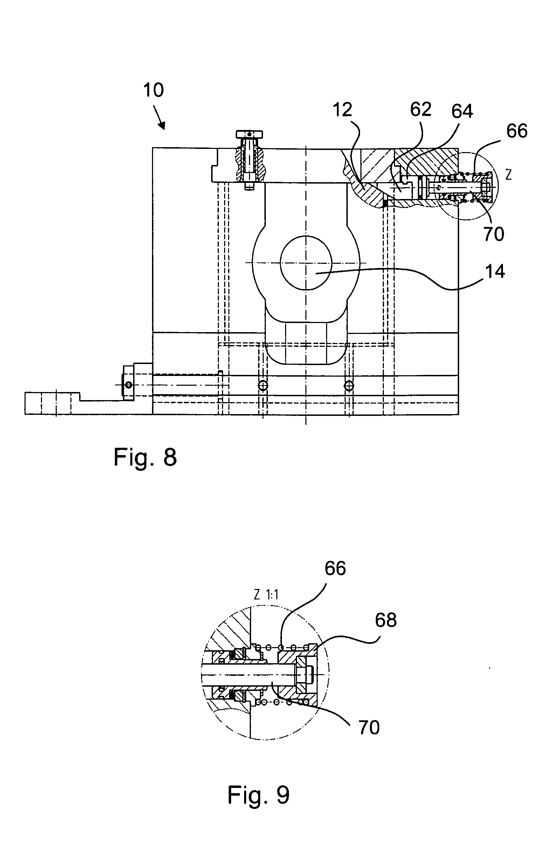

In Fig. 5 ist die Schneidanordnung während bzw. kurz nach einem Schlag bzw. Impuls vom Hammer 52 auf die bewegliche Matrize 12 gezeigt. Durch das Verschieben der beweglichen Matrize 12 gegenüber der starren Matrize 11 nach unten wird das Werkstück 39 in der Trennebene A geschnitten. Während des Impulses bzw. während des Ausführens des Schlags wird der Anschlagdorn 46 um wenige zehntel Millimeter von dem Stützdorn 15 zurückgezogen, damit die Positioniervorrichtung 48 nicht durch Erschütterungen bzw. Impulsübertragung beschädigt wird. Während der Anschlagdorn 46 zurückgezogen ist wird die Position des Stützdoms 15 innerhalb der Werkstückaufnahme 14 bzw. im Inneren des Werkstücks 39 durch das Anpassungselement 36 gesichert. Das Anpassungselement 36 gewährleistet dass der Stützdorn 15 am Innenumfang des Werkstücks 39 anliegt und nicht verrutscht und damit insbesondere die Ausrichtung zwischen der Kontaktfläche 40 und der Trennebene A erhalten bleibt. Während des Impulses ist bevorzugt die Vorschubzange 44 von dem zu bearbeitenden Werkstück entkoppelt, bzw. greift das Werkstück 39 nicht mehr, damit die Zange 44 durch Impulsübertragung nicht beschädigt wird. Vor dem Impuls wird dabei die Position des Werkstücks 39 mit der oben beschriebenen Klemmvorrichtung 62-70 (vgl. Figs. 8 und 9) gesichert, d.h. die bewegliche Matrize 12 ist gegenüber der feststehenden Matrize 11 leicht versetzt und klemmt somit das Werkstück 39 in der durch die Positioniervorrichtung 48 vorgegebenen Position ein.

Während des Verschiebens bzw. der Impulsübertragung kann aufgrund der hohen wirkenden Kräfte die beweglichen Matrize 12 gegen die feststehende Matrize 11 leicht verkippen, wodurch wiederum ein Spalt in der Trennebene A entstehen kann. Ein Spalt, in den Verunreinigungen eindringen können, kann daher ebenfalls zwischen den Stützelementen 16, 18 entstehen. Durch die Verbindungseinrichtung wird jedoch ein solcher Spalt sofort wieder geschlossen, bzw. ein solcher Spalt tritt aufgrund der Vorspannung der Stützelemente 16, 18 durch die Verbindungseinrichtung nur in geringerem Umfang auf (z.B. Größe des Spalts oder Häufigkeit) oder tritt gar nicht auf.

Nach dem Impuls bzw. dem Trennen wird die bewegliche Matrize 12 mittels des Dämpfungskolbens 54 wieder in ihre Ausgangsposition gebracht, so dass die Werkstückaufnahmen 14a, 14b der Matrizen 11, 12 wieder miteinander fluchten. Der Anschlagdorn 46 wird wieder in Kontakt mit dem Ende des Stützdorns 15 gebracht. Falls der Stützdorn 15 aufgrund des Impulses aus seiner Position (Kontaktfläche 40 liegt in Trennebene A) verschoben wurde, kann die Position wieder mittels der Positioniervorrichtung korrigiert werden. Während der Anschlagdorn 46 anliegt wird mittels der Vorschubzange 44 weiteres Stangenmaterial 39 der Werkzeugaufnahme 14a der beweglichen Matrize 12 zugeführt. Durch den Vorschub des Rohrmaterials um die Länge des getrennten Werkstücks 38 wird das geschnittene Werkstück 38 auf den Anschlagdorn 46 ausgeworfen. Falls das geschnittene Werkstück 38 kürzer ist als das erste Stützelement 16 des Stützdorns 15, bzw. kürzer ist als die Aufnahme 14a der beweglichen Matrize 12, wird das geschnittene Werkstück erst beim nächsten weiteren Zuführen oder einem nachfolgenden Zuführen auf den Anschlagdorn 46 ausgeworfen bzw. geschoben. Nach dem Auswerfen wird der auf einem Schlitten 49 gelagerte Anschlagdorn 46 horizontal von dem Matrizenblock 10 weggefahren. Dadurch wird das Werkstück 38 einem Abstreifer 50 zugestellt. In dieser Ausgestaltung ist der Abstreifer 50 ein Block, ausreichend wären ebenfalls einzelne Stäbe, Bürsten oder ähnliches, um ein auf dem Anschlagdorn 46 liegendes Werkstück abzustreifen. Das geschnittene Werkstück 38 wird auf ein Förderband 56 abgeworfen bzw. -gelegt und kann zu weiteren Bearbeitungseinrichtungen oder einem Sammelbehälter (nicht dargestellt) transportiert werden. In dieser Ausgestaltung ist am Förderband 56 eine Weiche 58 angeordnet, die z.B. den ersten Anschnitt eines Stangenmaterials oder sonstige unbrauchbare Teile aussortiert.

Fig. 7 zeigt die Schneidvorrichtung während des Abstreifens. Das geschnittene Werkstück 38 fällt auf das Förderband 56 und wird weiteren Bearbeitungsschritten zugestellt. Während des Abstreifens kann die Vorschubzange 44 zurückfahren, um "nachzugreifen" damit beim weiteren Zuführen genügend Material zum Zuführen vorliegt. Dabei wird wiederum die Position des bereits zugeführten Werkstücks 39 in der Werkstückaufnahme 14 durch die Klemmvorrichtung gesichert, trotz des weggefahrenen Anschlagdorns 46 der Positioniervorrichtung 48. Mit dem Anschlagdorn 46 wird dann der Stützdorn 15 wieder korrekt positioniert und es erfolgt nachfolgend ein Trennen des Werkstücks 39 wie bereits oben beschrieben.

Fig. 8 zeigt eine Vorderansicht des Matrizenblocks 10 von Fig. 1 mit einem Teilschnitt im Bereich der Klemmvorrichtung 62-70. Die Klemmvorrichtung 62-70 weist einen Keil 62 auf, der zwischen dem Matrizenblock 10 und der beweglichen Matrize 12 angeordnet ist. Mittels z.B. einer hydraulischen oder pneumatischen Betätigungseinrichtung kann der Keil 62 zurückgezogen oder weiter in den Matrizenblock 10 geschoben werden. Im letzteren Fall wird durch die Keilform die bewegliche Matrize 12 nach unten gegen die feststehende Matrize 11 um wenige zehntel Millimeter verschoben, so dass ein in den Werkstückaufnahmen 14a, 14b angeordnetes Werkstück 39 eingeklemmt wird. Die Klemmvorrichtung 62-70 wird mittels einer Feder 66, die an einen Kopf 68 der Klemmvorrichtung 62-70 anliegt, auch ohne Betätigungseinrichtung oder bei Ausfall der Einrichtung in einer zurückgezogenen Position gehalten, damit die bewegliche Matrize 12 in eine Ausgangslage zurückgeschoben werden kann, in der die Aufnahmen 14a, 14b der Matrizen 11, 12 miteinander fluchten, siehe auch Fig. 9.

Vorteilhaft ist der Keil 62 am Bolzen 64 nicht starr befestigt sonder lose "eingehängt". Da die Klemmvorrichtung 62-70 auch während oder zumindest bis kurz vor dem Trennen an der beweglichen Matrize 12 anliegt kann ein Impulsübertrag auf die Klemmvorrichtung 62-70 auftreten. Zudem kann beim Verschieben der beweglichen Matrize 12 nach unten die Klemmvorrichtung 62-70 bzw. der Keil 62 weiter in den Matrizenblock 10 hineinrutschen und beim Zurückstellen der beweglichen Matrize 12 kann ebenfalls ein Schlag oder Druck auf die Klemmvorrichtung 62-70 auftreten. Da der Keil 62 zumindest teilweise vom Bolzen 64 und den anderen Teilen durch das lose einhängen entkoppelt ist, kann der Keil 62 einen Schlag zumindest teilweise kompensieren und ein eventuelle Impulsübertragung oder Erschütterung von den anderen Teilen der Klemmvorrichtung fern halten. Dadurch werden diese Teile der Klemmvorrichtung geschont und Wartungszeiten werden verringert. Durch das Einhängen kann zudem bei einer evtl. Beschädigung des Keils 62, der Keil 62 leicht ausgewechselt werden.

### Bezugszeichenliste

- 10: Matrizenblock
- 11: feststehende Matrize
- 12: bewegliche Matrize
- 14: Werkstückaufnahme
- 14a, 14b: erste, zweite Werkstückaufnahme
- 15: Stützdorn
- 16: erstes Stützelement
- 18: zweites Stützelement
- 20: Seilzug
- 22: Feder
- 26: Bolzen
- 28: Befestigungskopf
- 30, 32: Öffnung
- 34: Durchgang
- 34a, 34b: erster, zweiter Durchgang
- 36: Anpassungselement
- 38, 39: Werkstück
- 40: Kontaktfläche
- 42: gefastes Ende
- 44: Vorschubzange
- 46: Anschlagdorn
- 48: Positioniervorrichtung
- 49: Schlitten
- 50: Abstreifer
- 52: Hammer
- 54: Dämpfungskolben
- 56: Förderband
- 58: Weiche
- 60: Klemmvorrichtung
- 62: Keil
- 64: Befestigung
- 66: Feder
- 68: Kopf
- 70: Bolzen
- A: Trennebene
- B: Fahrrichtung

## Patentansprüche

1. Schneidanordnung für eine Schneidevorrichtung, insbesondere für eine Schlagschneidevorrichtung, zum Trennen von Werkstücken, insbesondere von Hohlmaterial oder rohrförmigem Material, mit zumindest zwei Matrizenelementen (11, 12) mit jeweils einer Aufnahme (14a, 14b) zum Aufnehmen eines zu trennenden Werkstücks (39, 38), wobei zumindest eines der Matrizenelemente (12) relativ zu dem oder den anderen Matrizenelementen (11) beweglich gelagert ist, und einer in den Werkstückaufnahmen (14a, 14b) der zumindest zwei Matrizenelemente (11, 12) anordenbaren oder angeordneten Stützvorrichtung (15) zum Stützen eines zu bearbeitenden Werkstücks (38, 39), wobei die Stützvorrichtung (15) eine Verbindungseinrichtung (20-28) aufweist, die ein erstes und zumindest ein zweites Stützelement (16, 18) der Stützvorrichtung verbindet.

2. Anordnung nach Anspruch 1, wobei die Stützvorrichtung (15) innerhalb des Werkstücks anordenbar oder angeordnet ist.

3. Anordnung nach Anspruch 1 oder 2, wobei die Stützvorrichtung (15) zumindest eine Verschiebungsebene (40) zwischen dem ersten und dem zweiten Stützelement aufweist, wobei die Verschiebungsebene (40) zu der Trennebene (A) der zwei Matrizenelemente (11, 12) oder jeweils eine der Verschiebungsebenen zu einer der Trennebenen der zumindest zwei Matrizenelementen ausrichtbar ist oder ausgerichtet ist.

4. Anordnung nach Anspruch 1, 2 oder 3, wobei der Außenumfang der Stützvorrichtung (15) so ausgebildet ist, dass sie während des Trennschlags den Innenquerschnitt eines zu trennenden Werkstücks (38, 39) stabilisiert, wobei insbesondere der Außenquerschnitt der Stützvorrichtung (15) zumindest teilweise an den Innenquerschnitt des Werkstücks (38, 39) angepasst ist, wobei insbesondere der angepasste Außenquerschnitt zumindest im Bereich der Verschiebungsebene ausgebildet ist.

5. Anordnung nach einem der vorhergehenden Ansprüche, wobei die Verbindungseinrichtung (20-28) zumindest ein Zugelement (20) aufweist, insbesondere zumindest einen Seilzug.

6. Anordnung nach einem der vorhergehenden Ansprüche, wobei die Verbindungseinrichtung (20-28) zumindest eine Spanneinrichtung (22) zum Ausüben von Zugspannung auf das Zugelement (20) aufweist, insbesondere zumindest ein Federelement.

7. Anordnung nach einem der vorhergehenden Ansprüche, wobei ein Durchgang (34a) des ersten Stützelements (16) eine zumindest teilweise gefaste Öffnung (30) zum Durchführen der Verbindungseinrichtung aufweist und/oder ein Durchgang (34b) eines zweiten Stützelements (18) eine zumindest teilweise gefaste Öffnung (32) zur Durchführung der Verbindungseinrichtung aufweist, wobei insbesondere bei Ausrichtung des ersten zum zweiten Stützelement (16, 18) die gefasten Öffnungen (30, 32) aneinander anschließen.

8. Anordnung nach einem der vorhergehenden Ansprüche, wobei die Schneidanordnung eine verfahrbare Positioniervorrichtung (48) zum Positionieren der Stützvorrichtung (15) in den Werkstückaufnahmen (14a, 14b) aufweist.

9. Anordnung nach einem der vorhergehenden Ansprüche, wobei zumindest ein Teil des Außenumfangs der Stützvorrichtung (15) einem Innenumfang eines zu trennenden Werkstücks (38, 39) entspricht und/oder diesem angepasst ist, insbesondere dem Innenumfang eines Rohrmaterials.

10. Anordnung nach einem der vorhergehenden Ansprüche, wobei das erste Stützelement (16) in der Aufnahme (14a) des beweglichen Matrizenelements (12) und/oder das zumindest eine zweite Stützelement (18) in der Aufnahme (14b) des oder der anderen Matrizenelemente (11) angeordnet ist.

11. Anordnung nach einem der vorhergehenden Ansprüche, wobei zumindest ein Stützelement (18) zumindest ein Anpassungselement (36) aufweist zum Ausgleichen von Toleranzen von zu trennenden Werkstücken (38, 39), insbesondere zum Ausgleichen von Toleranzen bei Innenabmessungen eines zu trennenden Werkstücks.

12. Anordnung nach einem der vorhergehenden Ansprüche, wobei die Schneidanordnung eine Klemmvorrichtung (62-70) zum Sichern einer Position eines in den Werkstückaufnahmen (14a, 14b) angeordneten und zu trennenden Werkstücks (38, 39) und/oder bereits getrennten Werkstücks aufweist.

13. Verfahren zum Trennen von Werkstückrohlingen, insbesondere von Hohlmaterial, in einer Schneidanordnung, insbesondere in einer Schneidanordnung gemäß einem der Ansprüche 1 bis 16, wobei das Verfahren die Schritte aufweist:
Zuführen eines zu trennenden Werkstückrohlings (38, 39) in die Werkstückaufnahmen (14a, 14b) von Matrizenelementen (11,12);
Positionieren der Stützvorrichtung (15) in den Werkstückaufnahmen (14a, 14b), insbesondere mittels einer verfahrbaren Positioniervorrichtung (48), so dass zumindest eine Fläche (40) der Stützvorrichtung (15) in einer Ebene mit der Trennebene (A) der Schneidanordnung liegt, wobei zwei einzelne Stützelemente (16, 18) der Stützvorrichtung (15) miteinander verbunden sind;
Trennen des zugeführten Werkstückrohlings (38, 39).

14. Verfahren nach Anspruch 13, wobei das Verfahren zusätzlich die Schritte aufweist:
weiteres Zuführen des zu trennenden Werkstückrohlings (38, 39), wodurch das vom Werkstückrohling (39, 38) abgetrennte Werkstück (38) auf ein Anschlagelement (46) der Positioniervorrichtung (48) ausgeworfen oder aufgeschoben wird, Verfahren der Positioniervorrichtung (48) in eine Abwurfposition, Abwerfen des abgetrennten Werkstücks (38) vom Anschlagelement (46).

15. Verfahren nach Anspruch 13 oder 14, wobei zumindest während der Trennens die Positioniervorrichtung (48) von der Stützvorrichtung zurückgezogen ist, bevorzugt um 0,01 mm bis 1 mm zurückgezogen ist.
